# FASCICULE DE BREVET EUROPEEN

(11) **EP 0 700 795 B1**
(45) Date de publication et mention de la délivrance du brevet: **17.06.1998**
(21) Numéro de dépôt: 95420228.9
(22) Date de dépôt: 04.08.1995
(51) Int. Cl.: B44B 3/06, B23Q 1/54

(54) **Dispositif de marquage pour la réalisation de signes d'identification à deux dimensions sur la surface d'un objet quelconque**
Markierungsgerät zum Aufbringen von Zweidimensionellen-Identifikationszeichen auf der Oberfläche eines Gegenstandes
Device for marking, to get identification signs in two dimensions on the surface of an object

(30) Priorité: 08.08.1994 FR 9409970
(43) Date de publication de la demande: 13.03.1996
(73) Titulaire: TECHNIFOR Société Anonyme, 01700 Miribel (FR)
(72) Inventeur: Therond, Marcel, F-01700 Miribel (FR)
(74) Mandataire: Monnier, Guy

(56) Documents cités:
- EP-A- 0 504 691
- EP-A- 0 519 850
- EP-A- 0 611 233
- DE-A- 1 652 314
- GB-A- 2 172 535

## Description

La présente invention a trait aux dispositifs de marquage utilisés pour la réalisation, sur la surface d'un objet quelconque maintenu immobile, de chiffres, lettres ou autres signes d'identification à deux dimensions.

L'invention vise les dispositifs du type de ceux décrits dans le Brevet EP-A-0 519 850 (TECHNIFOR). On rappellera que dans ces dispositifs l'outil de marquage, du genre à micro-percussion, est monté axialement à l'extrémité d'une tige orientable dont l'extrémité opposée pénètre à l'intérieur d'un carter fixe à travers une liaison articulée susceptible d'être formée aussi bien par un joint à Cardan que par une simple rotule.

Pour la commande de l'orientation de la tige porte-outil, le carter renferme un mécanisme d'actionnement qui comprend deux vérins télescopiques orientés parallèlement l'un à l'autre pour agir sur deux bras fixés radialement sur la tige et disposés perpendiculairement l'un à l'autre. l'un des deux éléments de chaque vérin est attelé par une rotule au carter, tandis que l'autre élément est relié, lui-même par une rotule, à l'extrémité du bras radial qui lui correspond.

Dans l'une des formes de réalisation décrites dans le document antérieur précité, les deux vérins d'actionnement sont orientés parallèlement à l'axe de symétrie de la tige orientable en étant attelés à la paroi du carter opposée à celle qui porte la liaison articulée. On conçoit que si cette tige est retenue angulairement à l'encontre de toute rotation suivant son axe, un tel mécanisme d'actionnement assure dans d'excellentes conditions la commande du déplacement de l'outil.

Il convient toutefois de relever qu'un tel agencement comporte encore un inconvénient sensible, dû au fait que par suite de la géométrie de l'ensemble, toute commande exercée par l'un des deux vérins implique nécessairement une action correctrice appliquée à l'autre vérin, et ce même dans le cas où le dispositif est utilisé pour le marquage de tracés rectilignes. Cette correction permanente complique l'appareillage électronique utilisé pour la commande du mécanisme d'actionnement.

Pour remédier à cet inconvénient, la Déposante a proposé, dans sa Demande de Brevet Européen N° 0 611 233, citée ici selon l'article 54(3) CBE de disposer les rotules qui assurent l'attelage des vérins télescopiques au carter fixe, dans le plan transversal à la tige orientable qui passe par le centre de la liaison articulée interposée entre cette tige et ledit carter.

Une telle structure s'est révélée très performante, mais elle nécessite le recours à des vérins dont la commande très précise est toujours délicate. C'est dans cet esprit que la présente invention a pour objet une autre forme de réalisation qui, en faisant appel à des moteurs électriques du type pas à pas, permet, au moins dans le cas où la liaison articulée est constituée par un joint à Cardan, de simplifier l'actionnement du dispositif tout en maintenant les mêmes performances.

Le dispositif de marquage suivant l'invention est défini à la revendication unique.

En fait l'invention consiste, dans le cas où l'on adopte un joint à Cardan pour le montage articulé de la tige porte-outil dans le carter fixe, à associer à chacun des deux axes orthogonaux de pivotement de ce joint un moteur indépendant pour assurer la commande angulaire de chaque axe.

Cette disposition fondamentale se distingue clairement de la structure suivant le document EP-A-0 504 691 (MAUSER). Effectivement, si ce document montre bien un dispositif d'usinage équipé de deux moteurs indépendants (référencés 11 et 13) associés à un porte-outil (référencé 15), il ne s'agit pas d'un joint à Cardan, en ce sens que si l'un (13) de ces moteurs assure le basculement dudit porte-outil autour d'un axe orienté transversalement à ce dernier, l'autre moteur (11) opère la rotation de l'ensemble du porte-outil suivant son axe propre.

On se trouve en conséquence dans un cadre totalement différent de celui du joint à Cardan visé dans la présente invention, au point qu'à supposer même qu'on veuille combiner le document EP-A-0 504 691 (MAUSER) avec le document EP-A-0 519 850 (TECHNIFOR) cité plus haut, on ne reconstituerait pas la structure revendiquée dans la présente Demande.

En particulier une telle combinaison ne permettrait pas d'obtenir le résultat ici recherché, à savoir autoriser le marquage de tracés rectilignes à l'aide d'une seule et même commande.

Le dessin annexé, donné à titre d'exemple, permettra de mieux comprendre l'invention, les caractéristiques qu'elle présente et les avantages qu'elle est susceptible de procurer :

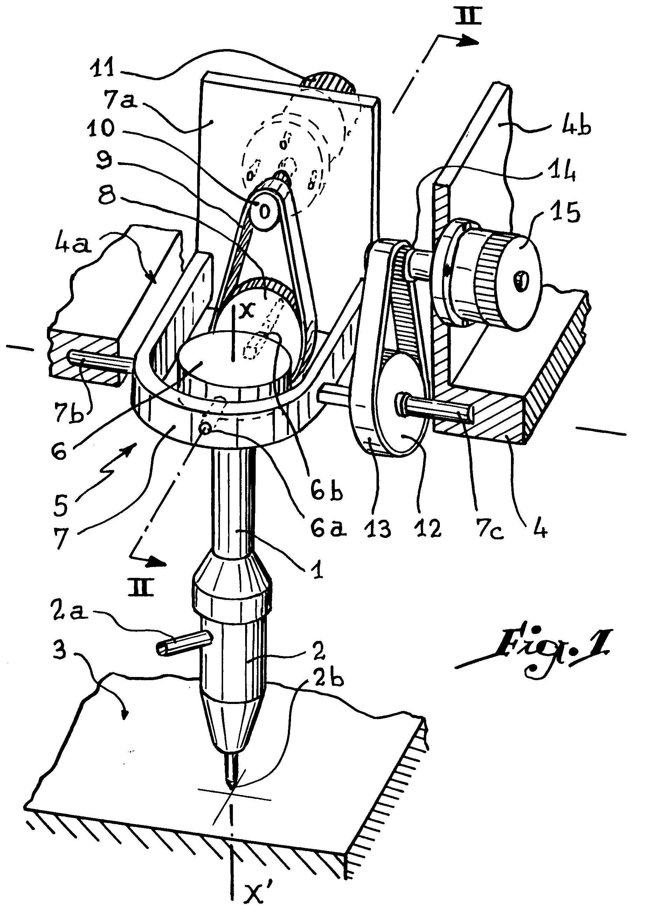

Fig. 1 illustre schématiquement en perspective l'agencement d'un dispositif de marquage établi conformément à l'invention.

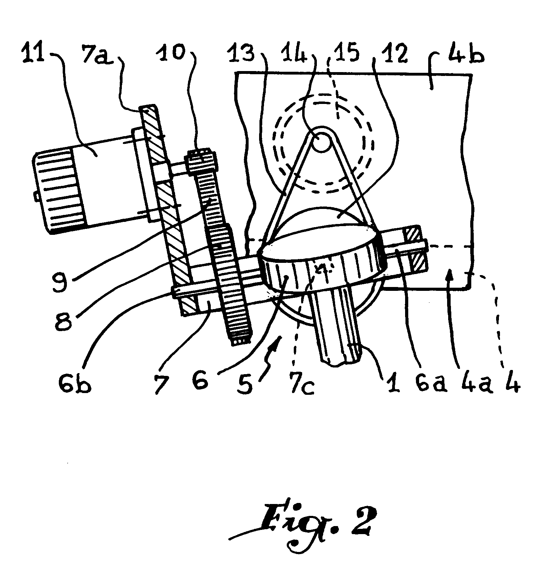

Fig. 2 est une coupe horizontale suivant le plan indiqué en II-II en fig. 1.

Sur le dessin, la référence 1 désigne la tige orientable qui porte suivant son axe l'outil à micro-percussion 2, lequel est alimenté pneumatiquement par une canalisation 2a de façon à ce que sa pointe mobile 2b assure le marquage de la surface 3 de l'objet à identifier. La tige 1 pénètre à l'intérieur d'un carter fixe 4 à travers une ouverture 4a dans laquelle est monté le joint à Cardan 5 qui supporte ladite tige 1 tout en permettant à celle-ci de s'orienter librement en tous sens par rapport à son axe de symétrie X-X' .

Le joint 5 comprend un disque intérieur 6 pourvu de deux pivots diamétralement opposés l'un à l'autre pour former un premier axe de pivotement ; le pivot 6a est porté par une pièce extérieure 7 en forme d'étrier, tandis que le pivot opposé 6b est supporté par une platine verticale 7a. Entre le disque 6 et la platine 7a est prévue une poulie 8 calée sur le pivot 6b et reliée par une courroie crantée 9 à une poulie supérieure 10 à plus petit diamètre ; cette poulie 10 est fixée en bout de l'arbre d'un moteur électrique 11 du type pas à pas.

De la même manière que le disque intérieur 6, l'étrier extérieur 7 du joint 5 est solidaire de deux pivots opposés 7b et 7c qui définissent un second axe de pivotement orienté perpendiculairement au premier et qui sont supportés dans les bords de l'ouverture 4a. Le pivot 7c porte une poulie d'entraînement 12 qui est reliée par une courroie crantée 13 à une petite poulie 14 calée sur l'arbre d'un moteur 15, identique au moteur 11 et porté par une platine verticale 4b solidaire du carter 4.

On conçoit sans peine que les moteurs 11 et 15 ne perturbent en rien l'attelage articulé de la tige orientable 1 et du carter fixe 4. La structure ci-dessus décrite permet d'obtenir, à l'aide de deux moteurs, identiquement le même mode de commande que celui réalisé avec les deux vérins de la Demande de Brevet Européen N° 0 611 233 sus-indiquée : la réalisation d'un tracé de marquage rectiligne sur la surface de marquage 3 nécessite l'actionnement d'un seul moteur, sans aucune action correctrice à apporter au niveau de l'autre moteur. La programmation électronique qui assure l'actionnement automatique des deux moteurs 11 et 15 est ainsi simplifiée.

## Revendications

1. Dispositif de marquage pour la réalisation de signes d'identification à deux dimensions sur la surface (3) d'un objet quelconque, du genre dans lequel l'outil à micro-percussion (2) est porté axialement par une tige orientable (1) qui est retenue angulairement suivant son axe et qui pénètre dans un carter fixe (4) à travers un joint à Cardan (5) autorisant sa libre orientation en tous sens suivant un axe de symétrie (X-X'), caractérisé en ce que la commande de l'orientation de la tige (1) est opérée à l'aide de deux moteurs électriques indépendants, du type pas a pas, (11 et 15) qui agissent sur l'un, respectivement sur l'autre, des deux axes orthogonaux de pivotement du joint (5), de telle sorte que le marquage de tracés rectilignes peut être obtenu par l'actionnement d'un seul moteur.

## Claims

1. Marking device for producing two-dimensional identification signs on the surface (3) of any object, of the type in which the micro-percussion tool (2) is axially carried by an orientatable spindle (1), which is angularly retained along its axis and which penetrates into a fixed casing (4) through a universal joint (5) permitting its free orientation in all directions along an axis of symmetry (X-X¹), characterised in that the control of the orientation of the spindle (1) is operated by means of two independent electric motors (11 and 15), of the stepped type, which act on one, or respectively on the other, of the two orthogonal pivotal axes of the joint (5), so that the marking of rectilinear outlines may be obtained by the action of a single motor.

## Patentansprüche

1. Markierungsgerät zum Aufbringen von zweidimensionalen Identifikationszeichen auf die Oberfläche eines beliebigen Gegenstandes, wobei das Mikroschlagwerkzeug (2) axial mittels eines verstellbaren Schaftes (1) gehalten ist, welcher längs seiner Achse in einem Winkel gehalten ist und welcher in ein feststehendes Gehäuse (4) quer durch ein Kardangelenk (5) eindringt, welches dessen freie Orientierung in jeder Richtung in bezug auf eine Symmetrieachse (X-X') gestattet, **dadurch gekennzeichnet, daß** die Lageregelung dieses Schaftes (1) mittels zweier unabhängiger Elektromotoren schrittweise (11 und 15) betrieben wird, welche auf die eine, beziehungsweise auf die andere, der rechtwinklig zueinander stehenden Drehachsen des Gelenkes einwirken, so daß eine Markierung mit geraden Linien durch den Betrieb eines einzigen Motors erreicht werden kann.
